# EUROPEAN PATENT APPLICATION

(11) **EP 4 844 933 A1**
(43) Date of publication of application: **25.11.2026**
(21) Application number: 26175917.9
(22) Date of filing: 30.04.2026
(51) Int. Cl.: H01M 50/533, H01M 50/54, H01M 50/528, H01M 50/536, H01M 50/538, H01M 50/553

(54) **SECONDARY BATTERY**

(30) Priority: 21.05.2025 KR 20250065851
(71) Applicant: SK On Co., Ltd., Seoul 03161 (KR)
(72) Inventor: LEE, Dong Geon, 34124 Daejeon (KR); LEE, Kyung Min, 34124 Daejeon (KR); BAEK, Ju Yeol, 34124 Daejeon (KR); YOU, Hyeon Jeong, 34124 Daejeon (KR); LEE, Ki Dong, 34124 Daejeon (KR); JANG, Beom Soo, 34124 Daejeon (KR)
(74) Representative: Bird & Bird LLP

(57) **Abstract**

A secondary battery is disclosed. The secondary battery includes an electrode assembly having at least one electrode foil and a current collector having a bonding region to which the electrode foil is welded, wherein the bonding region includes an outer surface to which the electrode foil is welded and an inner surface provided so as to correspond to the outer surface, the inner surface being disposed spaced apart from the electrode assembly by a predetermined distance.

## Description

### TECHNICAL FIELD

Embodiments of the present disclosure relate to a secondary battery.

### BACKGROUND

A secondary battery is an energy storage means capable of being charged and discharged through electrochemical reaction. Secondary batteries are used in various fields using electrical energy. For example, secondary batteries are widely used in mobile devices such as mobile phones, laptop computers, and tablet computers, and broader utilization thereof is being pursued in transportation equipment such as vehicles, aircraft, and ships. In addition, demand for secondary batteries is increasing in the energy storage system (ESS) field for utilizing surplus power.

In some secondary batteries, welding may be performed during a manufacturing process. For example, in some secondary batteries, welding may be used to electrically interconnect an electrode foil and a current collector provided in an electrode assembly. Welding is known as a joining method that can be used relatively cost-effectively while minimizing electrical resistance between members. However, since welding involves applying heat to the members, it is necessary to appropriately prevent damage to the members caused by heat.

### SUMMARY

Some embodiments of the present disclosure may provide a secondary battery.

In addition, some embodiments of the present disclosure may provide a secondary battery capable of improving weld quality between an electrode foil and a current collector.

In addition, some embodiments of the present disclosure may provide a secondary battery capable of preventing damage to an electrode assembly during a welding process.

Some embodiments of the present disclosure may be widely adopted in green technology fields such as electric vehicles, battery charging stations, and other battery-utilizing applications like solar power generation and wind power generation. In addition, some embodiments of the present disclosure may be used in eco-friendly electric vehicles (EVs) and hybrid vehicles (HVs) to prevent climate change by suppressing air pollution and greenhouse gas emissions.

According to an aspect of the present disclosure, a secondary battery includes an electrode assembly having at least one electrode foil and a current collector having a bonding region to which the electrode foil is welded, wherein the bonding region includes an outer surface to which the electrode foil is welded and an inner surface provided so as to correspond to the outer surface, the inner surface being disposed spaced apart from the electrode assembly by a predetermined distance.

In some embodiments, at least a part of the electrode foil may be made of a flexible material such that the electrode foil is bent toward the outer surface.

In some embodiments, the electrode foil may have a predetermined width, and the current collector may extend along the width.

In some embodiments, a region of the outer surface to which the electrode foil is welded may be flat.

In some embodiments, the electrode foil may be configured such that at least a part thereof is in tight contact with the outer surface so as to be welded to the outer surface.

In some embodiments, the distance may be configured to reduce the transfer of welding heat of the electrode foil from the inner surface to a corresponding region of the electrode assembly.

In some embodiments, the current collector may include a support region configured to support the bonding region so as to be spaced apart from the electrode assembly.

In some embodiments, the current collector may include a connection region configured to connect the bonding region and the support region to each other.

In some embodiments, an outer surface of the connection region may be formed so as to extend from the outer surface of the bonding region toward an outer surface of the support region at an inclination in a direction toward the electrode assembly.

In some embodiments, the current collector may include an electrically conductive metal in which the bonding region, the support region, and the connection region are integrally formed.

In some embodiments, the bonding region may include a first bonding region provided on one side of the support region and a second bonding region provided on the other side of the support region so as to correspond to the first bonding region.

In some embodiments, the electrode foil may include a first electrode foil welded to an outer surface of the first bonding region and a second electrode foil welded to an outer surface of the second bonding region.

In some embodiments, the current collector may include a first end region formed so as to extend from an end of the first bonding region at an inclination toward the electrode assembly and a second end region formed so as to extend from an end of the second bonding region at an inclination toward the electrode assembly.

In some embodiments, the secondary battery may further include an electrode terminal electrically connected to the current collector, the electrode terminal being disposed such that at least a part thereof is exposed on an outer surface of a cap plate.

In some embodiments, the secondary battery may further include a case configured to receive the electrode assembly and the current collector therein, wherein the case may be a prismatic case.

### BRIEF DESCRIPTION OF THE DRAWINGS

FIG. 1 is a perspective view showing a secondary battery according to an embodiment of the present disclosure;
FIG. 2 is an exploded perspective view of the secondary battery shown in FIG. 1;
FIG. 3 is an enlarged perspective view showing a joined state between a current collector and an electrode foil shown in FIG. 2;
FIG. 4 is an exploded perspective view of the current collector and the electrode foil shown in FIG. 3;
FIG. 5 is a cross-sectional view of the current collector and the electrode foil shown in FIG. 3;
FIG. 6 is a side view of the current collector and the electrode foil shown in FIG. 3 when viewed in an X2-axis direction;
FIG. 7 is a cross-sectional view showing a comparative example contrasting with the current collector and the electrode foil shown in FIG. 5;
FIG. 8 is an illustrative view showing another joined state between the current collector and the electrode foil shown in FIG. 5;
FIG. 9 is an illustrative view showing the state in which the current collector and the electrode foil are welded to each other in the comparative example corresponding to FIG. 7;
FIG. 10 is an illustrative view showing the state in which the current collector and the electrode foil are welded to each other in the embodiment corresponding to FIG. 5;
FIG. 11 is an exploded perspective view showing a current collector and an electrode foil according to another embodiment of the present disclosure;
FIG. 12 is a cross-sectional view of the current collector and the electrode foil shown in FIG. 11;
FIG. 13 is a cross-sectional view of a current collector and an electrode foil according to yet another embodiment of the present disclosure;
FIG. 14 is an exploded perspective view showing the current collector and the electrode foil according to the yet another embodiment of the present disclosure;
FIG. 15 is a perspective view showing a secondary battery according to another embodiment of the present disclosure; and
FIG. 16 is a perspective view showing a secondary battery according to yet another embodiment of the present disclosure.

### DETAILED DESCRIPTION

Hereinafter, the present disclosure will be described in detail with reference to the accompanying drawings. However, this is merely illustrative, and the present disclosure is not limited to specific embodiments described by way of example.

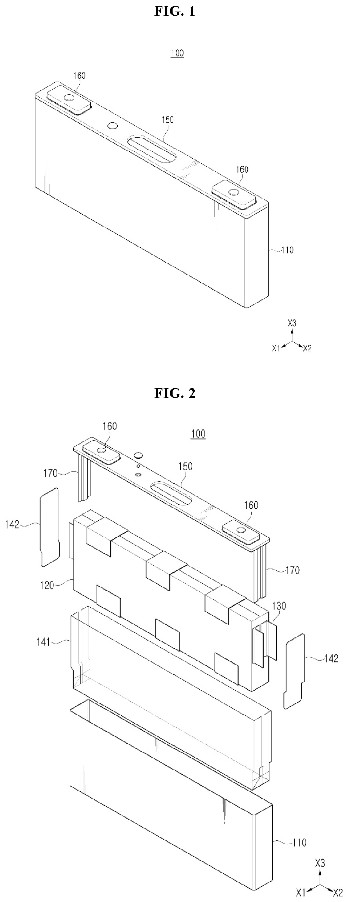

FIG. 1 is a perspective view showing a secondary battery according to an embodiment of the present disclosure. FIG. 2 is an exploded perspective view of the secondary battery shown in FIG. 1.

In the description, for the sake of convenience hereinafter, based on coordinate axes shown in FIG. 1, a direction along an X1 axis will be referred to as a front-to-rear direction, a direction along an X2 axis as a left-to-right direction, and a direction along an X3 axis as an up-and-down direction.

Referring to FIGs. 1 and 2, according to an aspect of the present disclosure, a secondary battery 100 may be disclosed. In some embodiments, the secondary battery 100 may include a case 110. The case 110 may be configured to receive an electrode assembly 120 and a current collector 170, which will be described later, therein. In some embodiments, the case 110 may be configured as a prismatic case. In other words, the case 110 may be configured to have a roughly rectangular prism shape. In some cases, a secondary battery 100 provided with such a case 110 may be referred to as a prismatic secondary battery or a prismatic battery cell. In the shown embodiment, the case 110 is shown as a rectangular prism having long sides in the left-to-right direction and short sides in the up-and-down direction. However, the specific shape and dimensions of the case 110 may be changed as needed and are not necessarily limited to those illustrated.

In some embodiments, the case 110 may have at least one opening. For example, the case 110 may be provided in an upper end thereof with an opening, as shown. However, the position of the opening may be changed as needed and is not necessarily limited to what is illustrated. Meanwhile, the opening may be closed by a cap plate 150, which will be described later. For example, once the electrode assembly 120 and other components are appropriately assembled in the case 110, the opening may be closed by fastening the cap plate 150.

Meanwhile, in some embodiments, the secondary battery 100 may include an electrode assembly 120. The electrode assembly 120 may be received in the case 110. Although not shown, in some embodiments, the electrode assembly 120 may include a first electrode and a second electrode disposed in the state in which a separator is interposed therebetween. In addition, the electrode assembly may be of a wound type, a stacked type, a zigzag-folded type, a stacked and folded type, or the like. However, in the present disclosure, the structure of the electrode assembly 120 may be changed as needed and is not necessarily limited to what is illustrated.

In some embodiments, the electrode assembly 120 may have at least one electrode foil 130. The electrode foil 130 may be configured to provide an electrical connection path between each electrode of the electrode assembly 120 and each electrode terminal 160, which will be described later. In some embodiments, a plurality of sets of electrode foils 130 may be provided. For example, in the shown embodiment, one set of electrode foils 130 is disposed at a right end of the electrode assembly 120, and another set of electrode foils 130 is disposed at a left end of the electrode assembly 120. Note that, in the shown embodiment, the electrode foils 130 disposed at the left end of the electrode assembly 120 are not shown depending on the direction in which the electrode foils 130 are shown.

In some embodiments, an insulating cover 141 may be provided on an outer surface of the electrode assembly 120. The insulating cover 141 may be configured to electrically insulate the electrode assembly 120 from the case 110. In some embodiments, the insulating cover 141 may be provided in the form of a sheet having electrical insulating properties. Alternatively, in some other embodiments, the insulating cover 141 may be replaced by an insulating coating provided on the outer surface of the electrode assembly 120 or an inner surface of the case 110.

Meanwhile, in some embodiments, the secondary battery 100 may include a cap plate 150. The cap plate 150 may be configured to close the opening provided in the case 110. In the shown embodiment, the cap plate 150 is shown as a rectangular plate having long sides in the left-to-right direction and short sides in the front-to-rear direction so as to correspond to the shape of the case 110.

In some embodiments, at least one electrode terminal 160 may be disposed on the cap plate 150. For example, as shown, a pair of electrode terminals 160 may be disposed on the cap plate 150 so as to be spaced apart left and right. In addition, each of the electrode terminals 160 may be electrically connected to a corresponding one of the electrodes. For example, in the shown embodiment, the electrode terminal 160 disposed on the right side of the cap plate 150 may be electrically connected to the first electrode provided in the electrode assembly 120, and the electrode terminal 160 disposed on the left side of the cap plate 150 may be electrically connected to the second electrode provided in the electrode assembly 120. In addition, each of the electrode terminals 160 may be electrically connected to a corresponding one of the electrodes via a current collector 170. For example, in the shown embodiment, the right-side electrode terminal 160 may be electrically connected to a corresponding one of the electrode foils 130 via a current collector 170 disposed on the right side of the cap plate 150, and the left-side electrode terminal 160 may be electrically connected to a corresponding one of the electrode foils 130 via a current collector 170 disposed on the left side of the cap plate 150.

Meanwhile, the electrode terminal 160 may be disposed such that at least a part thereof is exposed on the outer surface of the cap plate 150. For example, in the shown embodiment, the electrode terminal 160 may be disposed such that a part thereof is exposed on an upper surface of the cap plate 150. In addition, each electrode terminal 160 may be electrically connected to an external electrical connection means, such as a busbar, through an exposed region.

Meanwhile, **in** some embodiments, the cap plate 150 may be provided with a current collector 170. The current collector 170 may be configured to electrically interconnect the electrode foil 130 provided on the electrode assembly 120 and the electrode terminal 160 provided on the cap plate 150. In some embodiments, the current collector 170 may be provided in plural so as to correspond to the electrode terminals 160. For example, a pair of current collectors 170 may be provided, as shown. In the shown embodiment, each current collector 170 may extend downward from the left or right end of the cap plate 150 toward a left or right side surface of the electrode assembly 120 by a predetermined length.

In some embodiments, a tab insulation cover 142 may be attached to the joint between the current collector 170 and the electrode foil 130. The tab insulation cover 142 may cover the joint to protect the joint from the outside and assist in electrical insulation. In some embodiments, the tab insulation cover 142 may be provided in the form of a sheet having electrical insulation properties. Alternatively, in some other embodiments, the tab insulation cover 142 may be replaced by an insulating coating that covers the joint.

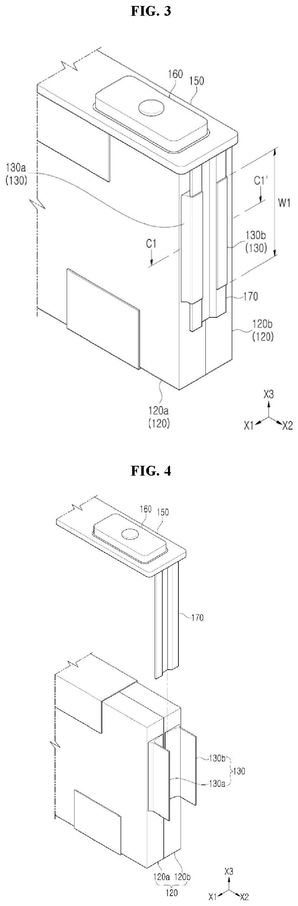

FIG. 3 is an enlarged perspective view showing a joined state between the current collector and the electrode foil shown in FIG. 2. FIG. 4 is an exploded perspective view of the current collector and the electrode foil shown in FIG. 3.

The pair of current collectors 170 shown in FIG. 2 may be formed so as to be identical or similar to each other. Hereinafter, therefore, detailed configurations will be described with a focus on the current collector 170 and the electrode foil 130 disposed on the right side of the figure.

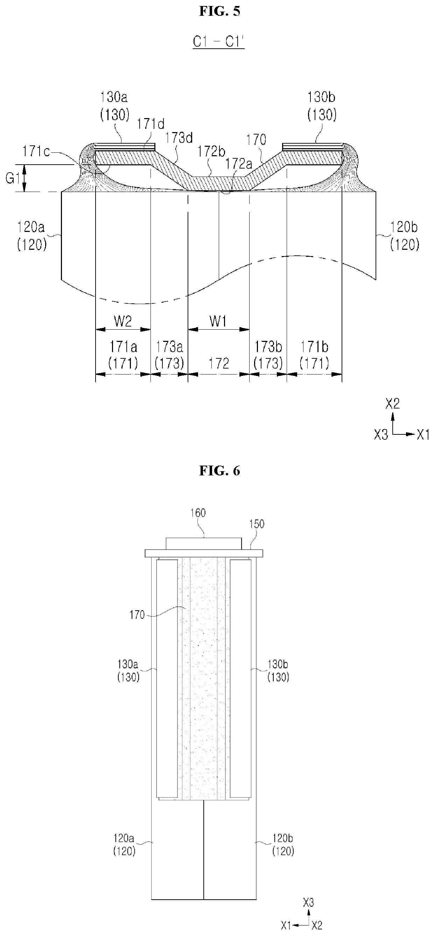

Referring to FIGs. 3 and 4, in some embodiments, at least a part of the electrode foil 130 may be made of a flexible material such that the electrode foil 130 is bent toward the current collector 170. Specifically, the electrode foil 130 may be provided in the form of a flexible metal sheet. In addition, the electrode foil 130 may extend from the electrode assembly 120 and may be bent toward the current collector 170. Furthermore, the bent electrode foil 130 may be welded to the current collector 170 on an outer surface 171d of the current collector 170 (see FIG. 5).

In some embodiments, the electrode foil 130 may be provided by bonding a plurality of individual foils to each other. The plurality of individual foils may be bonded to each other while being welded to the current collector 170, or may be bonded to each other in advance before being welded to the current collector 170.

Meanwhile, in some embodiments, the electrode foil 130 may include a first electrode foil 130a and a second electrode foil 130b. The first and second electrode foils 130a and 130b may be welded to a single current collector 170. In other words, in the shown embodiment, the first and second electrode foils 130a and 130b may be disposed at the front and rear positions in the X1-axis direction, the first electrode foil 130a may be welded to a part of the front side of the current collector 170, and the second electrode foil 130b may be welded to a part of the rear side of the current collector 170.

**In** some embodiments, the first and second electrode foils 130a and 130b may extend from different electrode assemblies 120a and 120b, respectively. For example, in the shown embodiment, the first electrode foil 130a may extend from the first electrode assembly 120a, and the second electrode foil 130b may extend from the second electrode assembly 120b.

Meanwhile, in some embodiments, each electrode foil 130 may have a predetermined width W1. In the shown embodiment, the width may refer to the width W1 of each electrode foil 130 in the up-and-down direction. In addition, the current collector 170 may extend **in** the width direction of the electrode foil 130. That is, focusing on the shown embodiment, the current collector 170 may extend from an upper end to a lower end of each electrode foil 130 in the up-and-down direction. The current collector 170 extending in the width direction of the electrode foil 130 may contribute to securing an appropriate bonding area with the electrode foil 130.

FIG. 5 is a cross-sectional view of the current collector and the electrode foil shown in FIG. 3. FIG. 6 is a side view of the current collector and the electrode foil shown in FIG. 3 when viewed in the X2-axis direction.

Referring to FIGs. 5 and 6, in some embodiments, the secondary battery 100 may include an electrode assembly 120 having at least one electrode foil 130 and a current collector 170 having a bonding region 171 to which the electrode foil 130 is welded. In addition, the bonding region 171 may include an outer surface 171d to which the electrode foil 130 is welded and an inner surface 171c provided so as to correspond to the outer surface 171d, the inner surface 171c being disposed spaced apart from the electrode assembly 120 by a predetermined distance.

Specifically, the secondary battery 100 may include an electrode assembly 120, and the electrode assembly 120 may have at least one electrode foil 130. Furthermore, **in** the shown embodiment, the electrode foil 130 may include first and second electrode foils 130a and 130b corresponding to a single current collector 170, wherein the first and second electrode foils 130a and 130b may be disposed spaced apart from each other by a predetermined distance in the X1-axis direction.

Meanwhile, in some embodiments, the secondary battery 100 may include a current collector 170. The current collector 170 may have a bonding region 171 to which the electrode foil 130 is welded. In some embodiments, a plurality of bonding regions 171 may be provided so as to correspond to the electrode foils 130, respectively. For example, in the shown embodiment, the current collector 170 may have one bonding region 171a corresponding to the first electrode foil 130a and another bonding region 171b corresponding to the second electrode foil 130b. For convenience, hereinafter, the bonding regions 171a and 171b will be referred to as a first bonding region 171a and a second bonding region 171b. In the shown embodiment, the first and second bonding regions 171a and 171b may be disposed spaced apart from each other by a predetermined distance in the X1-axis direction. In addition, the first electrode foil 130a may be welded to the first bonding region 171a, and the second electrode foil 130b may be welded to the second bonding region 171b.

Each bonding region 171 may have one surface 171c facing the electrode assembly 120 and the other surface 171d opposite the one surface 171c. For convenience, hereinafter, the one surface 171c will be referred to as an inner surface 171c, and the other surface 171d will be referred to as an outer surface 171d. For reference, the inner surface 171c and the outer surface 171d are named based on the positional relationship between the current collector 170 and the electrode assembly 120. In addition, the names of the inner surface 171c and the outer surface 171d will be identically used for a connection region 173 and a support region 172, which will be described later. Meanwhile, the bonding region 171 may have a predetermined thickness between the inner surface 171c and the outer surface 171d. In the shown embodiment, the current collector 170 is shown as having a generally uniform thickness; accordingly, the thickness of the bonding region 171 may be the same as or similar to the thickness of the current collector 170.

In some embodiments, the electrode foil 130 may be welded to the outer surface 171d of the bonding region 171. In other words, the outer surface 171d of the bonding region 171 may function as a bonding surface for welding the electrode foil 130. The electrode foil 130 may be welded to the bonding region 171 in the state in which at least a part of the electrode foil 130 overlaps the outer surface 171d of the bonding region 171. In other words, the electrode foil 130 may be welded to the bonding region 171 in the state in which the electrode foil 130 overlaps the outer surface 171d of the bonding region 171 in a thickness direction.

For reference, in the description, the term "welding" encompasses various bonding methods of bonding members by applying heat. For example, the term "welding" may include typical welding methods such as resistance welding, friction welding, ultrasonic welding, and laser welding. In addition, the term "welding" may include other methods of bonding members by applying heat, such as brazing, soldering, and hot pressure welding.

Meanwhile, in some embodiments, the outer surface 171d of the bonding region 171 may be flat. More specifically, the outer surface 171d of the bonding region 171 may be configured as a flat region to which the electrode foil 130 is welded. Such a bonding region 171 allows for maintaining good contact with the electrode foil 130, thereby contributing to the realization of sound welding between the bonding region 171 and the electrode foil 130.

Meanwhile, the inner surface 171c of the bonding region 171 may form the thickness of the bonding region 171 between the inner surface 171c and the outer surface 171d. Here, the inner surface 171c of the bonding region 171 may be disposed spaced apart from the electrode assembly 120 by a predetermined distance G1. For example, the inner surface 171c of the bonding region 171 may be disposed spaced apart from the outer surface of the electrode assembly 120 by a distance of approximately 0.5 mm. However, the distance between the inner surface 171c of the bonding region 171 and the electrode assembly 120 is not particularly limited to the illustrated value.

In some embodiments, the distance G1 may function to reduce the transfer of welding heat between the bonding region 171 and the electrode assembly 120. In other words, when welding heat is applied to the outer surface 171d of the bonding region 171, the distance G1 may function to mitigate the transfer of the welding heat from the inner surface 171c of the bonding region 171 to the electrode assembly 120. Accordingly, damage to the electrode assembly 120 caused by the welding heat may be reduced. This will be explained in detail in the following description.

Meanwhile, in some embodiments, the current collector 170 may further include a support region 172 and a connection region 173. The support region 172 may support the bonding region 171 so as to be spaced apart from the electrode assembly 120. For example, in the shown embodiment, the support region 172 may be disposed between the first and second bonding regions 171a and 171b to form a central portion of the current collector 170. In some embodiments, an inner surface 172a of the support region 172 facing the electrode assembly 120 may be supported by the electrode assembly 120 to support bonding region 171 so as to be spaced apart from the electrode assembly 120.

In some embodiments, the support region 172 and the bonding region 171 may respectively have predetermined widths W1 and W2 in the front-to-rear direction. In addition, the width W2 of the bonding region 171 may be greater than the width W1 of the support region 172. For example, in the shown embodiment, the total width W2 of the first and second bonding regions 171a and 171b may be 3 to 5 times the width W1 of the support region 172. Such a bonding region 171 may contribute to securing an appropriate bonding area with the electrode foil 130. However, the width W2 of the bonding region 171 is not particularly limited to the illustrated value.

The connection region 173 may be formed so as to extend between the bonding region 171 and the support region 172. In other words, the bonding region 171 and the support region 172 may be connected to each other via the connection region 173. In the shown embodiment, the connection region 173 may include a first connection region 173a extending between the first bonding region 171a and the support region 172 and a second connection region 173b extending between the second bonding region 171b and the support region 172.

In some embodiments, the connection region 173 may be formed so as to extend at an inclination. Specifically, an outer surface 173d of the connection region 173 may be formed to extend from the outer surface 171d of the bonding region 171 toward an outer surface 172b of the support region 172. Here, the outer surface 173d of the connection region 173 may be formed so as to extend closer to the outer surface of the electrode assembly 120 as the outer surface 173d approaches the support region 172. In other words, the outer surface 173d of the connection region 173 may be formed so as to extend from the bonding region 171 toward the support region 172 at an inclination in a direction toward the outer surface of the electrode assembly 120. The inclined connection region 173 may prevent bonding defects in the electrode foil 130. This will be explained in detail in the following description.

In some embodiments, the bonding region 171, the support region 172, and the connection region 173 of the current collector 170 may be formed integrally. In other words, the current collector 170 may be provided as a single electrically conductive metal including the bonding region 171, the support region 172, and the connection region 173. For example, the current collector 170 may be manufactured by pressing a metal plate member having a predetermined thickness into the shown shape. The current collector 170 formed integrally in this manner may contribute to reducing manufacturing costs and lowering electrical resistance.

Meanwhile, as described above, in some embodiments, the bonding region 171 may be provided in plural. For example, in the shown embodiment, the bonding region 171 may include first and second bonding regions 171a and 171b. The first bonding region 171a may be provided on one side of the support region 172 (the left side in the X1-axis direction in the figure). In addition, the second bonding region 171b may be provided on the other side of the support region 172 (the right side **in** the X1-axis direction in the figure) so as to correspond to the first bonding region 171a.

In some embodiments, the first and second bonding regions 171a and 171b may be disposed symmetrically with respect to the support region 172, as shown. However, the present disclosure is not necessarily limited thereto. Although not shown, in some other embodiments, the first and second bonding regions 171a and 171b may be configured in an asymmetrical shape. For example, depending on the arrangement and dimensions of the first and second electrode foils 130a and 130b, the length of the first bonding region 171a in the X1-axis direction may be greater or less than the length of the second bonding region 171b in the X1-axis direction.

The current collector 170 may function to reduce the transfer of welding heat to the electrode assembly 120 during welding of the electrode foil 130. Accordingly, damage to the electrode assembly 120 caused by the welding heat may be prevented. In addition, the current collector 170 may function to appropriately bring the electrode foil 130 into tight contact with the bonding region 171. For example, even if the length of the electrode foil 130 is greater than a set length due to manufacturing tolerances or misalignment, the electrode foil 130 may be appropriately brought into tight contact with the bonding area 171 by the shape of the current collector 170. This will be explained in detail with reference to subsequent figures.

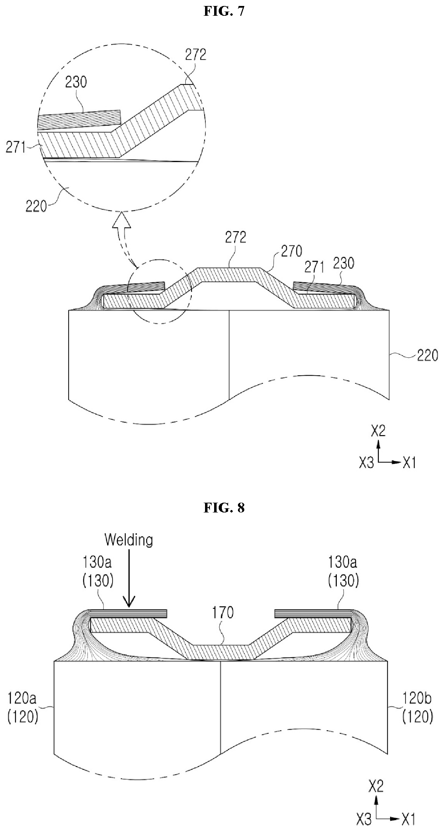

FIG. 7 is a cross-sectional view showing a comparative example contrasting with the current collector and the electrode foil shown in FIG. 5.

FIG. 7 illustrates a current collector 270 configured such that a central region 272 of the current collector 270 protrudes outward (toward an upper side in the X2-axis direction in the figure) and an edge region 271 of the current collector 270 is recessed inward (toward a lower side in the X2-axis direction in the figure), unlike the aforementioned embodiment.

In the current collector 270 of the comparative example, the electrode foil 230 may not be appropriately brought into tight contact with a welding region 271, i.e., the edge region 271 of the current collector 270, depending on the length of the electrode foil 230. More specifically, if the length of the electrode foil 230 is greater than a set length, like the electrode foil 230 shown on the left side of the figure, the electrode foil 230 may interfere with the central region 272 in which an end thereof protrudes. Accordingly, a gap may be formed between the electrode foil 230 and the welding region 271, or the electrode foil 230 may not be appropriately brought into tight contact with the welding region 271. Furthermore, if welding is performed in this state, a bonding defect may occur between the electrode foil 230 and the current collector 270.

Meanwhile, in the current collector 270 of the comparative example, the welding region 271 may be disposed in tight contact with the electrode assembly 220. Furthermore, in the state in which the welding region 271 is in tight contact with the electrode assembly 220, welding heat is applied to the welding region 271 such that the electrode foil 230 is welded to the welding region 271. Accordingly, in the current collector 270 of the comparative example, the welding heat applied to the welding region 271 may be directly transferred to the electrode assembly 220. In addition, the welding heat applied to the electrode assembly 220 may cause damage to the electrode assembly 220. For example, the welding heat may damage the separator or other components surrounding the electrode assembly 220. Such damage may ultimately result in defects in the manufactured secondary battery or act as a cause for degraded performance and quality.

FIG. 8 is an illustrative view showing another joined state between the current collector and the electrode foil shown in FIG. 5.

FIG. 8 illustrates the case in which, in the current collector 170 of the aforementioned embodiment, the length of the electrode foil 130 is greater than the set length. Referring to FIG. 8, in the embodiment of the present disclosure, the bonding region 171 of the current collector 170 may be flat, and the connection region 173 connecting the bonding region 171 and the support region 172 to each other may be inclined downward toward the electrode assembly 120. Accordingly, even when the length of the electrode foil 130 is greater than the set length, like the electrode foil 130 shown on the left side of the figure, the end of the electrode foil 130 does not interfere with the connection region 173 or the support region 172. In addition, the remaining region of the electrode foil 130 may be maintained in appropriately tight contact with the outer surface 171d of the bonding region 171. Accordingly, despite the length error of the electrode foil 130, the electrode foil 130 may be appropriately brought into tight contact with the bonding region 171, whereby good welding may be implemented.

Meanwhile, in the embodiments of the present disclosure, the inner surface 171c of the bonding region 171 may be disposed spaced apart from the outer surface of the electrode assembly 120 by a predetermined distance G1. The distance G1 may function to reduce the transfer of welding heat applied to the bonding region 171 to the electrode assembly 120. Accordingly, damage to the electrode assembly 120 caused by the welding heat may be prevented.

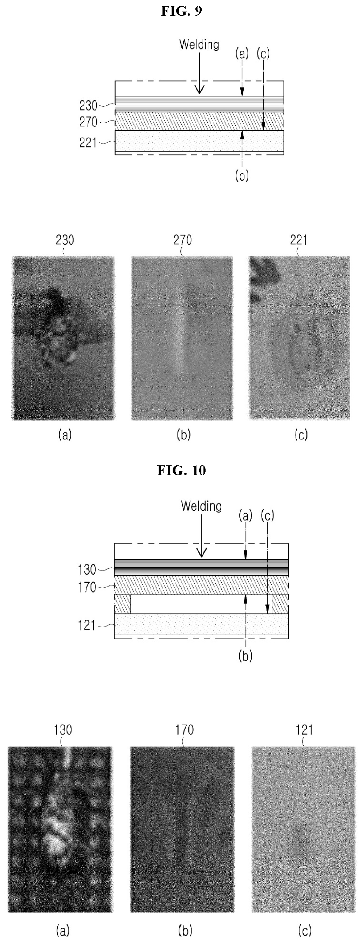

FIG. 9 is an illustrative view showing the state in which the current collector and the electrode foil are welded to each other in the comparative example corresponding to FIG. 7.

FIG. 9 illustrates the case in which the current collector 270 and the electrode foil 230 are welded to each other in the state in which the current collector 270 is in tight contact with the outer surface of the electrode assembly, i.e. a separator 221, like the comparative example of FIG. 7. FIGs. 9(a), 9(b), and 9(c) are photographs of the outer surface of the electrode foil 230, the inner surface of the electrode foil 230, and an outer surface of the separator 221, respectively, taken after welding. It can be easily seen from FIG. 9(c) that damage to the separator 221 has occurred due to welding heat in the comparative example.

FIG. 10 is an illustrative view showing the state in which the current collector and the electrode foil are welded to each other in the embodiment corresponding to FIG. 5.

FIG. 10 illustrates the case in which the electrode foil 130 and the current collector 170 are welded to each other in the state in which the current collector 170 is spaced apart from the outer surface of the electrode assembly, i.e., the separator 121, like the embodiment of the present disclosure. For reference, the distance between the current collector 170 and the separator 121 was set to 0.5 mm. FIGs. 10(a), 10(b), and 10(c) are photographs taken from the same positions as in FIG. 9. As shown in FIGs. 10(a) and 10(b), the electrode foil 130 and the current collector 170 may be welded to each other similarly to the comparative example of FIG. 9. However, as shown in FIG. 10(c), it can be seen that damage to the separator 121 caused by the welding heat was significantly reduced in the embodiment of the present disclosure.

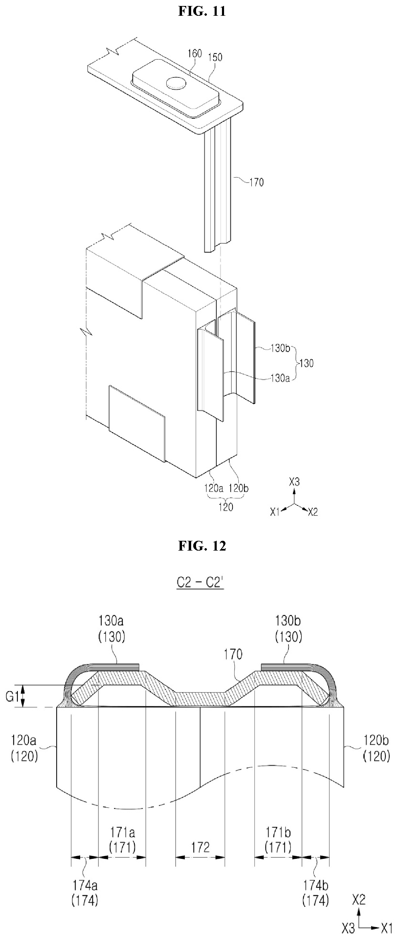

FIG. 11 is an exploded perspective view showing a current collector and an electrode foil according to another embodiment of the present disclosure. FIG. 12 is a cross-sectional view of the current collector and the electrode foil shown in FIG. 11.

For convenience, the following description will focus on the differences from the aforementioned embodiment.

Referring to FIGs. 11 and 12, in some embodiments, the current collector 170 may further include an end region 174. The end region 174 may be formed so as to extend at an inclination from an end of the bonding region 171 toward the electrode assembly 120. Specifically, in the shown embodiment, the end region 174 may include a first end region 174a extending from the first bonding region 171a and a second end region 174b extending from the second bonding region 171b. The first end region 174a may be formed so as to extend from an end of the first bonding region 171a (a left end in the X1-axis direction in the figure) at an inclination toward the electrode assembly 120. In addition, the second end region 174b may be formed so as to extend from an end of the second bonding region 171b (a right end in the X1-axis direction in the figure) at an inclination toward the electrode assembly 120.

The end region 174 may provide a more stable support structure for the bonding region 171. That is, in the shown embodiment, the first bonding region 171a may be disposed between the first end region 174a and the support region 172, and both ends of the first bonding region 171a in the X1-axis direction may be supported by the first end region 174a and the support region 172. In addition, the second bonding region 171b may be disposed between the second end region 174b and the support region 172, and both ends of the second bonding region 171b in the X1-axis direction may be supported by the second end region 174b and the support region 172. As both ends of each of the first and second bonding regions 171a and 171b in the X1-axis direction are supported, as described above, whereby the first and second bonding regions 171a and 171b may be more stably supported. In addition, accordingly, the first and second bonding regions 171a and 171b may maintain an appropriate distance G1 from the electrode assembly 120.

Furthermore, in some embodiments, the end region 174 may provide an elastic support structure for the bonding region 171 together with the support region 172. That is, in the shown embodiment, the first bonding region 171a may be disposed spaced apart from the electrode assembly 120 by a predetermined distance G1, whereby both ends of the first bonding region 171a may be elastically supported by the first end region 174a and the support region 172. In addition, the second bonding region 171b may be disposed spaced apart from the electrode assembly 120 by a predetermined distance G1, whereby both ends of the second bonding region 171b may be elastically supported by the second end region 174b and the support region 172. Such an elastic support structure may function to cushion external force applied to the electrode foil 130. For example, external force applied to the electrode foil 130 during welding may be cushioned by the elastic support structure. Alternatively, during the use of the manufactured secondary battery 100, external force applied to the electrode foil 130 may be cushioned by the elastic support structure. Accordingly, defects occurring during the manufacturing process or use of the secondary battery 100 may be reduced.

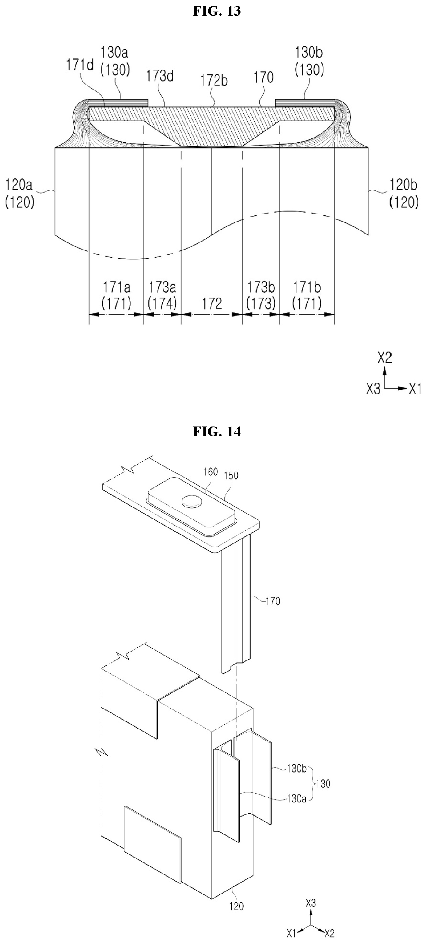

FIG. 13 is a cross-sectional view of a current collector and an electrode foil according to yet another embodiment of the present disclosure.

Referring to FIG. 13, in some embodiments, the entire outer surface of the current collector 170 may be approximately flat. Specifically, in the shown embodiment, the outer surface 173d of each of the first and second connection regions 173a and 173b and the outer surface 172b of the support region 172 may be flat so as to correspond to the outer surface 171d of each of the first and second bonding regions 171a and 171b. Although the shape of the outer surface of the current collector 170 is partially modified, the current collector 170 may function generally similarly to the embodiment described with reference to FIG. 5 and others.

FIG. 14 is an exploded perspective view showing the current collector and the electrode foil according to the yet another embodiment of the present disclosure.

Referring to FIG. 14, the number of electrode foils corresponding to each electrode may be changed as needed. For example, in the shown embodiment, one electrode assembly 120 may be provided, and the electrode foils 130a and 130b corresponding to electrodes of the electrode assembly 120 may be provided in two sets. In other words, in the shown embodiment, two separate electrode foils 130c and 130d corresponding to one electrode may be provided at one end of the electrode assembly 120. In addition, two separate electrode foils corresponding to the other electrode may be provided at the other end of the electrode assembly 120. The two separate electrode foils 130c and 130d may be bent toward one current collector 170 and welded to current collector 170 in a manner similar to the aforementioned embodiment.

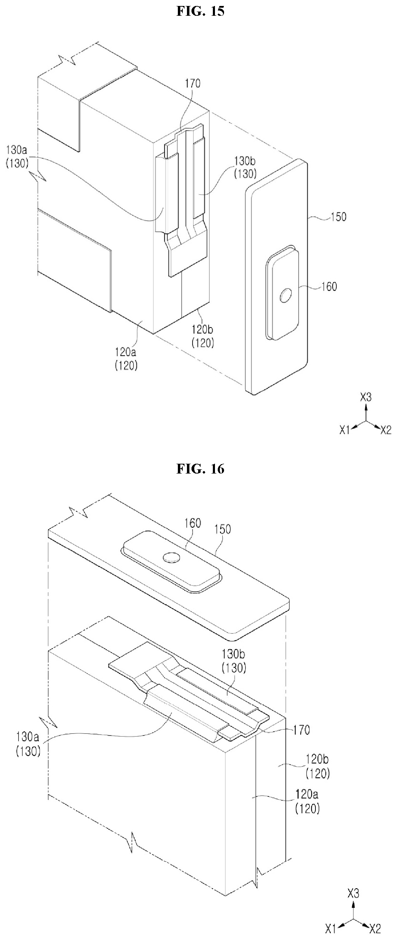

FIG. 15 is a perspective view showing a secondary battery according to another embodiment of the present disclosure.

Referring to FIG. 15, the position of a cap plate 150 may be changed as needed. For example, in the shown embodiment, the secondary battery may include a case (not shown) having openings formed in left and right surfaces thereof in the X2-axis direction, and the cap plate 150 may be fastened to the left and right surfaces of the secondary battery so as to appropriately seal the case. The current collector 170 and the electrode foil 130 described above may be similarly provided in this type of secondary battery. That is, the current collector 170 may be disposed such that an inner surface of a bonding region is spaced apart from an electrode assembly 120 by a predetermined distance, and the electrode foil 130 may be welded to the current collector 170 via the bonding region.

FIG. 16 is a perspective view showing a secondary battery according to yet another embodiment of the present disclosure.

Referring to FIG. 16, the position of an electrode foil 130 may be changed as needed. For example, in the shown embodiment, the electrode foil 130 may be provided on an upper side in the X3-axis direction, and first and second electrode foils 130a and 130b may be disposed spaced apart from an upper end of an electrode assembly 120 in the front-to-rear direction along the X1 axis. The current collector 170 and the electrode foil 130 described above may be similarly provided in this type of secondary battery. That is, the current collector 170 may be disposed such that an inner surface of a bonding region is spaced apart from the electrode assembly 120 by a predetermined distance, and the electrode foil 130 may be welded to the current collector 170 via the bonding region.

As described above, some embodiments of the present disclosure may provide a secondary battery.

In addition, some embodiments of the present disclosure may improve weld quality between an electrode foil and a current collector. In some embodiments, the current collector may be appropriately brought into tight contact with the electrode foil despite the length error of the electrode foil, and tight contact between the current collector and the electrode foil may contribute to improving weld quality between the electrode foil and the current collector. Furthermore, in some embodiments, a bonding region provided on the current collector may be elastically supported via a connection region and/or an end region, and such an elastic support structure may contribute to improving weld quality by appropriately responding to external force applied to the electrode foil or the current collector during welding.

In addition, some embodiments of the present disclosure may prevent damage to an electrode assembly during a welding process. In some embodiments, the bonding region provided on the current collector may be disposed spaced apart from the electrode assembly by a predetermined distance, and such an arrangement may function to mitigate the transfer of welding heat to the electrode assembly during welding. Accordingly, damage to the electrode assembly during the welding process may be prevented. Furthermore, the defect rate during the manufacturing process may be reduced, and the performance and quality of the manufactured secondary battery 100 may be improved.

As is apparent from the above description, some embodiments of the present disclosure may provide a secondary battery.

In addition, some embodiments of the present disclosure may provide a secondary battery capable of improving weld quality between an electrode foil and a current collector.

In addition, some embodiments of the present disclosure may provide a secondary battery capable of preventing damage to an electrode assembly during a welding process.

Some of the aspects of the present disclosure are as follows:
Aspect 1: A secondary battery comprising: an electrode assembly 120 having at least one electrode foil 130; and a current collector 170 having a bonding region 171 to which the electrode foil 130 is welded, wherein the bonding region 171 comprises: an outer surface 171d to which the electrode foil 130 is welded; and an inner surface 171c provided so as to correspond to the outer surface 171d, the inner surface 171c being disposed spaced apart from the electrode assembly 120 by a predetermined distance.
Aspect 2: The secondary battery according to aspect 1, wherein at least a part of the electrode foil 130 is made of a flexible material such that the electrode foil 130 is bent toward the outer surface 171d.
Aspect 3: The secondary battery according to any one of the preceding aspects, wherein
   the electrode foil 130 has a predetermined width W1, and the current collector 170 extends along the width W1.
Aspect 4: The secondary battery according to any one of the preceding aspects, wherein a region of the outer surface 171d to which the electrode foil 130 is welded is flat.
Aspect 5: The secondary battery according to any one of the preceding aspects, wherein the electrode foil 130 is configured such that at least a part thereof is in tight contact with the outer surface 171d so as to be welded to the outer surface 171d.
Aspect 6: The secondary battery according to any one of the preceding aspects, wherein the distance is configured to reduce transfer of welding heat of the electrode foil 130 from the inner surface 171c to a corresponding region of the electrode assembly 120.
Aspect 7: The secondary battery according to any one of the preceding aspects, wherein the current collector 170 comprises a support region 172 configured to support the bonding region 171 so as to be spaced apart from the electrode assembly 120.
Aspect 8: The secondary battery according to any one of the preceding aspects, wherein the current collector 170 comprises a connection region 173 configured to connect the bonding region 171 and the support region 172 to each other.
Aspect 9: The secondary battery according to any one of the preceding aspects, wherein an outer surface 173d of the connection region 173 is formed so as to extend from the outer surface 171d of the bonding region 171 toward an outer surface 172b of the support region 172 at an inclination in a direction toward the electrode assembly 120.
Aspect 10: The secondary battery according to any one of the preceding aspects, wherein the current collector 170 comprises an electrically conductive metal in which the bonding region 171, the support region 172, and the connection region 173 are integrally formed.
Aspect 11: The secondary battery according to any one of the preceding aspects, wherein the bonding region 171 comprises: a first bonding region 171a provided on one side of the support region 172; and a second bonding region 171b provided on the other side of the support region 172 so as to correspond to the first bonding region 171a.
Aspect 12: The secondary battery according to any one of the preceding aspects, wherein the electrode foil 130 comprises: a first electrode foil 130a welded to an outer surface of the first bonding region 171a; and a second electrode foil 130b welded to an outer surface of the second bonding region 171b.
Aspect 13: The secondary battery according to any one of the preceding aspects, wherein the current collector 170 comprises: a first end region 174a formed so as to extend from an end of the first bonding region 171a at an inclination toward the electrode assembly 120; and a second end region 174b formed so as to extend from an end of the second bonding region 171b at an inclination toward the electrode assembly 120.
Aspect 14: The secondary battery according to any one of the preceding aspects, further comprising an electrode terminal 160 electrically connected to the current collector 170, the electrode terminal being disposed such that at least a part thereof is exposed on an outer surface of a cap plate 150.
Aspect 15: The secondary battery according to any one of the preceding aspects, further comprising: a case 110 configured to receive the electrode assembly 120 and the current collector 170 therein, wherein the case 110 is a prismatic case.

The above description is merely an example applying the principles of the present disclosure, and other configurations may be further included without departing from the scope of the present disclosure.

## Claims

1. A secondary battery comprising:
an electrode assembly 120 having at least one electrode foil 130; and
a current collector 170 having a bonding region 171 to which the electrode foil 130 is welded, wherein
the bonding region 171 comprises:
an outer surface 171d to which the electrode foil 130 is welded; and
an inner surface 171c provided so as to correspond to the outer surface 171d, the inner surface 171c being disposed spaced apart from the electrode assembly 120 by a predetermined distance.

2. The secondary battery according to claim 1, wherein at least a part of the electrode foil 130 is made of a flexible material such that the electrode foil 130 is bent toward the outer surface 171d.

3. The secondary battery according to any one of the preceding claims, wherein
the electrode foil 130 has a predetermined width W1, and
the current collector 170 extends along the width W1.

4. The secondary battery according to any one of the preceding claims, wherein a region of the outer surface 171d to which the electrode foil 130 is welded is flat.

5. The secondary battery according to any one of the preceding claims, wherein the electrode foil 130 is configured such that at least a part thereof is in tight contact with the outer surface 171d so as to be welded to the outer surface 171d.

6. The secondary battery according to any one of the preceding claims, wherein the distance is configured to reduce transfer of welding heat of the electrode foil 130 from the inner surface 171c to a corresponding region of the electrode assembly 120.

7. The secondary battery according to any one of the preceding claims, wherein the current collector 170 comprises a support region 172 configured to support the bonding region 171 so as to be spaced apart from the electrode assembly 120.

8. The secondary battery according to any one of the preceding claims, wherein the current collector 170 comprises a connection region 173 configured to connect the bonding region 171 and the support region 172 to each other.

9. The secondary battery according to any one of the preceding claims, wherein an outer surface 173d of the connection region 173 is formed so as to extend from the outer surface 171d of the bonding region 171 toward an outer surface 172b of the support region 172 at an inclination **in** a direction toward the electrode assembly 120.

10. The secondary battery according to any one of the preceding claims, wherein the current collector 170 comprises an electrically conductive metal in which the bonding region 171, the support region 172, and the connection region 173 are integrally formed.

11. The secondary battery according to any one of the preceding claims, wherein the bonding region 171 comprises:
a first bonding region 171a provided on one side of the support region 172; and
a second bonding region 171b provided on the other side of the support region 172 so as to correspond to the first bonding region 171a.

12. The secondary battery according to any one of the preceding claims, wherein the electrode foil 130 comprises:
a first electrode foil 130a welded to an outer surface of the first bonding region 171a; and
a second electrode foil 130b welded to an outer surface of the second bonding region 171b.

13. The secondary battery according to any one of the preceding claims, wherein the current collector 170 comprises:
a first end region 174a formed so as to extend from an end of the first bonding region 171a at an inclination toward the electrode assembly 120; and
a second end region 174b formed so as to extend from an end of the second bonding region 171b at an inclination toward the electrode assembly 120.

14. The secondary battery according to any one of the preceding claims, further comprising an electrode terminal 160 electrically connected to the current collector 170, the electrode terminal being disposed such that at least a part thereof is exposed on an outer surface of a cap plate 150.

15. The secondary battery according to any one of the preceding claims, further comprising:
a case 110 configured to receive the electrode assembly 120 and the current collector 170 therein, wherein
the case 110 is a prismatic case.
